# EUROPÄISCHE PATENTSCHRIFT

(11) **EP 1 948 456 B1**
(45) Veröffentlichungstag und Bekanntmachung des Hinweises auf die Patenterteilung: **01.09.2010**
(21) Anmeldenummer: 06807764.3
(22) Anmeldetag: 07.11.2006
(51) Int. Cl.: B60G 21/055, B60G 17/016, B60G 17/018

(54) **WANKSTABILISATOR**
ROLL STABILIZER
STABILISATEUR ANTI-ROULIS

(30) Priorität: 10.11.2005 DE 102005053608
(43) Veröffentlichungstag der Anmeldung: 30.07.2008
(73) Patentinhaber: Schaeffler KG, 91074 Herzogenaurach (DE)
(72) Erfinder: GRAU, Ulrich, 91448 Emskirchen (DE)
(86) Internationale Anmeldenummer: PCT/EP2006/068166
(87) Internationale Veröffentlichungsnummer: WO 2007/054489

(56) Entgegenhaltungen:
- EP-A- 1 652 700
- EP-A- 1 714 809
- WO-A-2006/135088
- DE-A1- 10 002 455
- JP-A- 6 249 927
- US-A- 5 027 048
- US-A- 5 091 679

## Beschreibung

### Gebiet der Erfindung

Die vorliegende Erfindung betrifft einen Wankstabilisator für das Fahrwerk eines Kraftfahrzeugs. Derartige Wankstabilisatoren wirken einem Wanken des Aufbaus des Kraftfahrzeugs aktiv entgegen. Ein Aktuator zum Stellen eines Stabilisatorelementes ist zu diesem Zweck mit einem Elektromotor versehen.

Aus DE 100 02 455 A1 beispielsweise ist eine Stabilisatoranordnung für das Fahrwerk eines Kraftfahrzeugs bekannt geworden, dessen Aktuator einen elektromechanischen Stellantrieb aufweist. Der Rotor des Stellantriebs treibt eine mit einer Spindelmutter versehene Gewindespindel an. An diesen elektromechanischen Stellantrieb ist ein Getriebe angeschlossen, das eine Längsverschiebung der Spindelmutter auf der Gewindespindel in eine Schwenkbewegung um die Drehachse des Aktuators umwandelt. Der Aktuator ist in diesem Fall zwischen zwei Stabilisatorhälften angeordnet und verdreht diese gegeneinander, um einem Wanken aktiv entgegen zu wirken.

Aus WO 2004/37574 beispielsweise ist eine Stabilisatoranordnung für das Fahrwerk eines Kraftfahrzeuges bekannt geworden, bei dem ebenfalls zwischen zwei Stabilisatorhälften ein mit einem elektromechanischen Stellantrieb versehener Aktuator angeordnet ist. Zusätzlich zu dem elektromotorischen Antrieb ist bei diesem Wankstabilisator eine Feder vorgesehen, die ein Verdrehen der Stabilisatorhälften unterstützt, sodass eine größere Leistung zum Verdrehen der Stabilisatorhälften zur Verfügung steht.

Aus der gattungsbildenden US 5,091,679 ist eine Fahrzeugaufhängung bekannt geworden, bei der ein Aktuator zwischen gefederten und ungefederten Massen vorgesehen ist. Ein Stellsignal für den Aktuator wird aus einem Drehwinkelsignal eines Elektromotors und aus einem eine Position eines ungefederten Fahrzeugaufhängungsteiles angebenden Positionssignal generiert ist.

Bei diesen bekannten aktiven Wankstabilisatoren ist es erforderlich, den Elektromotor gezielt anzusteuern, um eine gewünschte Verdrehung der Stabilisatorhälften durchzuführen. Es ist daher erforderlich, die Lage der Stabilisatorhälften, oder allgemein ausgedrückt, die Lage oder die Position des Stabilisatorelementes, das von dem Elektromotor verstellt wird, bestimmen zu können. Zu diesem Zweck ist in der Regel eine aufwendige Messtechnik erforderlich.

Aufgabe der vorliegende Erfindung ist es, einen Wankstabilisator nach den Merkmalen des Oberbegriffs des Anspruchs 1 anzugeben, bei dem der Aktuator auf einfacher Art und Weise für ein gezieltes Stellen des Stabilisatorelementes betätigt werden kann.

Erfindungsgemäß wird diese Aufgabe durch den Wankstabilisator gemäß Anspruch 1 gelöst. Ein Stellsignal für den Aktuator ist aus einem Drehwinkelsignal des Elektromotors und aus einem Initialisierungssignal generiert, das eine Referenzposition des Stabilisatorelements angibt. Ein wesentlicher Aspekt der Erfindung besteht somit darin, den Elektromotor an sich als Teil der messtechnischen Einrichtung vorzusehen. Mit geringem Aufwand kann somit der Aktuator gezielt betätigt werden.

Eine den Aktuator steuernde Steuereinrichtung stellt das Stellsignal für den Aktuator bereit. Beispielsweise sind bürstenlose Gleichstrommotoren (BLDC-Motor) bekannt, deren Rotor aus Permanentmagneten und deren Stator aus mehreren Elektromagneten besteht. Die Lage des Rotors wird ständig gemessen und die Elektromagneten im Stator entsprechend kommutiert. Beim bürstenlosen Gleichstrommotor erfolgt die Ansteuerung der Wicklungen (Stränge) dergestalt, dass der Zeiger des Ständerflusses - hervorgerufen durch eine stromführende Wicklung - mit dem Zeiger des Läuferflusses - verursacht durch den Permanentmagneten - im Mittel den Winkel von 90 ° Grad einschließt. Um dies sicherzustellen werden Rotorpositions-Stellungsgeber eingesetzt. Mit diesen von den Stellungsgebern gewonnenen Informationen können die Wicklungsströme von einem Strang auf den folgenden Strang weitergeschaltet werden. Die Rotorposition wird hauptsächlich mithilfe von Hallsonden oder auch optoelektronischen Verfahren ermittelt. Es gibt bereits Überlegungen, auch magnetorresistive Sensoren einzusetzen. In all diesen Fällen werden demzufolge bereits von dem Motor an sich Signale bereitgestellt, die sowohl Auskunft geben über einen Drehwinkel oder eine Drehlage des Rotors und den Drehsinn des Rotors.

Gemäß der vorliegenden Erfindung wird nun zusätzlich zu diesem Drehwinkelsignal des Elektromotors ein Initialisierungssignal benötigt, das eine Referenzposition des Stabilisatorelementes angibt. Dies erfolgt dadurch, dass das Stabilisatorelement mit einer Markierung versehen ist, und dass ein Sensor vorgesehen ist, der ein Initialisierungssignal erzeugt, wenn die Markierung unter einer Stellbewegung des Stabilisatorelementes an diesen Sensor vorbeibewegt wird. Mit diesem Initialisierungssignal kann die Referenzposition des Stabilisatorelementes angegeben werden.

Bei dem erfindungsgemäßen Wankstabilisator kann demzufolge ein einfacher Sensor eines bekannten Typs in Verbindung mit einer Referenzmarkierung genügen, dass Positionssignal zu generieren. Mit der Referenzposition des Stabilisatorefementes und der Drehwinkellage des Rotors liegen demzufolge alle Informationen vor, die für ein gezieltes Betätigen des Elektromotors und somit ein gezieltes Stellen des Stabilisatorelementes vorliegen.

Das Drehwinkelsignal und das Positionssignal werden erfindungsgemäß zu diesem Zweck in der Steuereinrichtung für ein geeignetes Stellsignal verarbeitet werden.

Das Stellsignal zum Steuern des Aktuators kann ermittelt werden, wenn das Drehwinkelsignal des Elektromotors sowohl den Drehsinn des Rotors als auch die Drehlage des Rotors angibt und wenn das Initialisierungssignal eine Referenzposition des Stabilisatorelementes angibt.

Die vorliegende Erfindung eignet sich für Stabilisatorelemente, die beispielsweise wie die oben zum Stand der Technik genannten Wankstabilisatoren Stabilisatorhälften aufweisen, zwischen denen der Aktuator wirksam angeordnet ist. In diesem Fall kann der bereits erwähnte Initialisierungssensor einem der beiden Stabilisatorhälften zugeordnet sein.

Es wurde bereits erwähnt, dass bei dem aus der WO 2004/37574 bekannten Wankstabilisator neben dem elektromotorischen Stellantrieb als zusätzlicher Antrieb für Verstellbewegungen eine Feder vorgesehen sein kann. Zu diesem Zweck kann bei einer erfindungsgemäßen Weiterbildung der Wankstabilisator mit einer Feder versehen sein, die mit einem Getriebe derart zusammenwirkt, dass in ein und derselben Entspannungsrichtung der Feder wahlweise eine Verdrehung der Stabilisatorhälften in die eine oder in die entgegen gesetzte Drehrichtung möglich ist. In diesen Fall verrichtet die Feder einen Hub. Bei dieser erfindungsgemäßen Weiterbildung kann beispielsweise ein Hubsensor eingesetzt werden, der kontinuierlich in jeder Hublage Auskunft gibt über den Abstand zwischen den beiden Federenden und somit Auskunft gibt über die Drehlage der Stabilisatorhälften. In diesem Fall genügt es, wenn beispielsweise von dem Elektromotor lediglich der Drehsinn des Rotors als Drehwinkelsignal an die Steuereinrichtung weitergegeben wird. Denn mit dem Drehsinn des Rotors und der absolut gemessenen Lage der Stabilisatorhälften über den Hubsensor kann nun gezielt der Elektromotor angesteuert werden. Selbstverständlich kann alternativ zum Hubsensor auch ein Initialisierungssensor eingesetzt werden; in diesem Fall liefert das Drehwinkelsignal des Elektromotors neben den Informationen über den Drehsinn zusätzlich Informationen über die Drehlage des Rotors des Elektromotors.

Nachstehend wird die Erfindung anhand von einem in insgesamt zwei Figuren abgebildeten Ausführungsbeispiel näher erläutert. Es zeigen:
- Figur 1: einen erfindungsgemäßen Wankstabilisator und
- Figur 2: eine Ausschnittsvergrößerung des erfindungsgemäßen Wanksta- bilisators gemäß Figur 1.

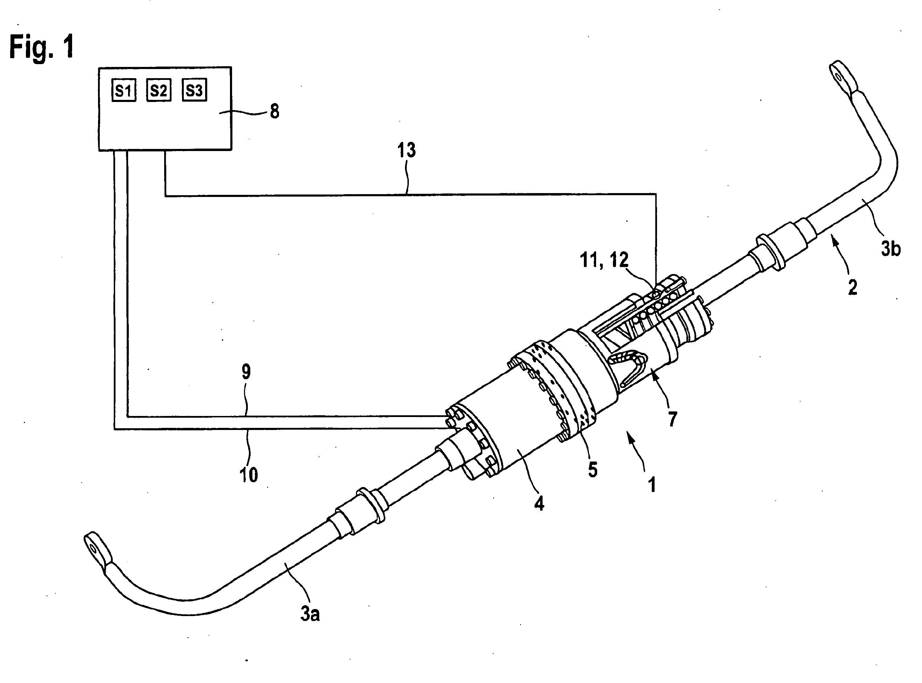

Figur 1 zeigt einen erfindungsgemäßen Wankstabilisator für das Fahrwerk eines Kraftfahrzeuges. Ein Aktuator 1 ist zum Stellen eines Stabilisatorelementes 2 vorgesehen. Das Stabilisatorelement 2 ist vorliegend durch zwei Stabilisatorhälften 3 gebildet, die um eine gemeinsame Längsachse herum drehbar angeordnet, sind. Zwischen diesen beiden Stabilisatorhälften 3 ist der Aktuator 1 wirksam angeschlossen. Der Aktuator 1 ist mit einem Elektromotor 4 versehen. Unter einen Betätigung des Aktuators 1 werden mit Unterstützung des Elektromotors 4 die beiden Stabilisatorhälften 3 gegeneinander wahlweise in dem einen oder in dem anderen Drehsinn verdreht.

Der Elektromotor 4 ist an ein Getriebe 5 angeschlossen. Ein hier nicht weiter abgebildeter Rotor des Elektromotors 4 ist an den Getriebeeingang angeschlossen, und die Stabilisatorhälfte 3b ist an den Getriebeausgang angeschlossen.

Ferner ist ein Zusatzantrieb 7 vorgesehen, der ein Verdrehen der beiden Stabilisatorhälften 3a, 3b unterstützt. Dieser Zusatzantrieb 7 ist weiter unten ausführlicher beschrieben.

Ferner ist eine Steuereinrichtung 8 zum Steuern des Elektromotors 4 vorgesehen. In dieser Steuereinrichtung 8 werden ein Drehwinkelsignal S1 und ein Positionssignal S2 zu einem Stellsignal S3 verarbeitet, wobei dieses Stellsignal S3 an eine hier nicht weiter abgebildete Leistungselektronik zur Bestromung des Elektromotors 4 weitergegeben wird. Das Drehwinkelsignal S1 wird unmittelbar von dem Elektromotor 4 abgezweigt und über Leitungen 9, 10 an die Steuereinrichtung 8 weitergegeben. Der Elektromotor 4 ist vorliegend ein bürstenloser Gleichstrommotor, dessen elektronischer Kommutator mit Hallsensoren versehen ist, die Auskunft über die Drehlage des Rotors des Elektromotors 4 geben. Über die zeitliche Abfolge der von den Hallsensoren gemessenen Werte kann zudem Rückschluss auf den Drehsinn des Rotors gewonnen werden.

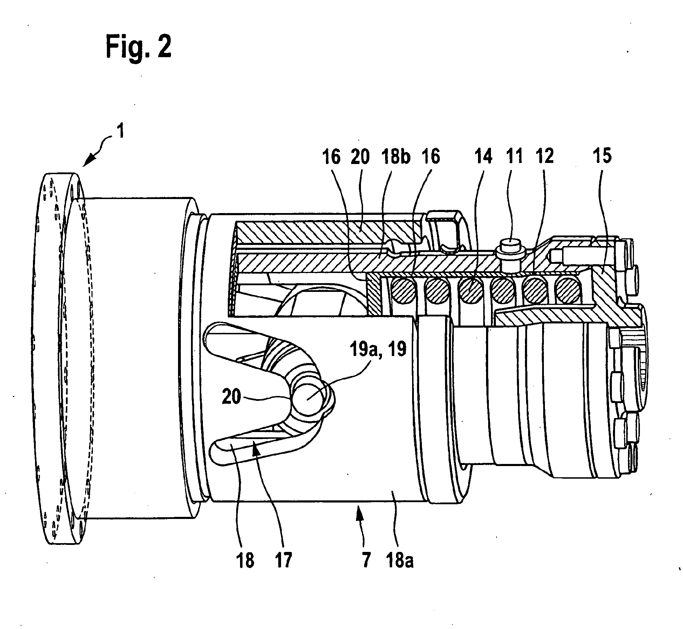

Ferner ist ein Initialisierungssensor 11 vorgesehen, der der einen Stabilisatorhälfte 3b zugeordnet ist (Figur 2). Der Initialisierungssensor 11 arbeitet mit einer Referenzmarkierung 12 zusammen, die der anderen Stabilisatorhälfte 3a zugeordnet ist. Die Referenzmarkierung 12 ist hier symbolisch durch einen schwarzen Punkt angedeutet; sie kann körperlicher Natur sein, also beispielsweise ein Vorsprung, eine Ausnehmung, oder beispielsweise auch durch einen magnetisierten Bereich gebildet sein. Unter einen Verdrehung der beiden Stabilisatorhälften 3a, 3b überfährt die Referenzmarkierung 12 den Initialisierungssensor 11, der über eine Leitung 13 das Positionssignal S2 an die Steuereinrichtung 8 übermittelt.

Das Stellsignal S3 wird demzufolge gewonnen aus dem Drehwinkelsignal S1 und dem Positionssignal S2, das vorliegend auch als Initialisierungssignal bezeichnet werden kann.

Figur 2 zeigt eine Ausschnittsvergrößerung, in der deutlich der Zusatzantrieb 7, der Initialisierungssensor 11 und die Referenzmarkierung 12 abgebildet sind.

Der Zusatzantrieb 7 umfasst eine Schraubendruckfeder 14 die einerseits an einem Gehäuseflansch 15 des Aktuators 1 abgestützt ist, und die andererseits an einer Hülse 16 angreift, in die die Schaubendruckfeder 14 eingesetzt ist. Die Schraubendruckfeder 14 ist an ein Kurvenbahngetriebe 17 angeschlossen, wobei eine lineare Entspannung der vorgespannten Schraubendruckfeder 14 entlang der Drehachse des Stabilisatorelements 2 über das Kurvenbahngetriebe 17 in eine Drehbewegung der beiden Stabilisatorhälften 3a, 3b gegeneinander umgewandelt wird. Zu diesen Zweck weist das Kurvenbahngetriebe 17 Kurvenbahnen auf, von denen in der Figur 2 eine Kurvenbahn 18 deutlich abgebildet ist. Die andere Kurvenbahn ist vorliegend geradlinig parallel zur Drehachse ausgebildet. Die Kurvenbahnen 18 sind an Kurvenbahnträgern 18a, 18b ausgebildet, von denen der eine Kurvenbahnträger 18a der Stabilisatorhälfte 3a und der andere Kurvenbahnträger 18 b der Stabilisatorhälfte 3b zugeordnet ist.

Die Schraubendruckfeder 14 greift über die Hülse 16 an einem ein Koppelelement 19a bildenden Kopplungszapfen 19 an, der in die Kurvenbahnen 18 eingreift. Als Koppelelement ist jedes Element geeignet, dass mit Kurvenbahnen zusammenarbeitet. In Figur 2 ist der Kopplungszapfen 19 in einer Neutralposition des Aktuators 1 abgebildet. Die Kurvenbahn 18 ist etwa V-förmig ausgebildet, wobei eine Verschiebung des Kopplungszapfen in den unteren Schenkel der V-förmigen Kurvenbahn eine Verdrehung der beiden Stabilisatorhälften 3a, 3b in dem einem Drehsinn und eine Verschiebung des Kopplungszapfens 19 in den anderen Schenkel der V-förmigen Kurvenbahn 18 eine Verdrehung der Stabilisatorhälften 3a, 3b in dem entgegen gesetzten Drehsinn zur Folge hat. Die Hülse 16 verrichtet jedoch unabhängig von dem Drehsinn immer den selben Hub, da die Kurvenbahn bezogen auf die Nulllage sinnvoller Weise symmetrisch ausgebildet ist.

Der Kurvenbahnträger 18b ist mit dem Gehäuseflansch 15 versehen, wobei die hier nicht abgebildete Stabilisatorhälfte 3b drehfest an den Gehäuseflansch 15 angeflanscht ist.

Die Hülse 16 ist gegenüber dem Kurvenbahnträger 18b längsverschieblich angeordnet. Der Initialisierungssensor 11 ist an dem Kurvenbahnträger fixiert. Die Referenzmarkierung 12 ist an der Hülse 16 angeordnet. Unter einer Längsverschiebung der Hülse 16 überstreicht die Referenzmarkierung 12 den Initialisierungssensor 11, sodass ein Initialisierungs- oder Positionssignal erzeugt wird. Im Betriebsbereich des Wankstabilisators von einer Endlage des Stabilisatorelementes 2 zu der anderen Endlage des Stabilisatorelementes 2 überstreicht demzufolge die Referenzmarkierung 12 den Initialisierungssensor 11 zweimal. Mit diesen beiden Initialisierungssignalen kann nun auf einen Mittelwert zurückgerechnet werden, wobei dieser Mittelwert die Neutralstellung des Aktuators 1 angibt. In dieser Position befindet sich der Kopplungszapfen 19 an seiner Rastposition 20, die mittig zwischen den beiden Schenkeln der V-förmigen Kurvenbahn 18 angeordnet ist.

Nun ist es demzufolge möglich, dieses Initialisierungssignal - die damit errechnete Neutralstellung - in der Steuereinrichtung 8 mit dem Drehwinkelsignals S1 des Elektromotors 4 in geeigneter Weise zu kombinieren, sodass nun gezielt der Elektromotor 4 für eine weitere Betätigung des Aktuators 1 angesteuert werden kann.

Als Initialisierungssensor kann beispielsweise ein induktiver Initiator, ein Mikroschalter, eine Fotodiode mit Sende LED oder auch andere bekannte Type eingesetzt werden.

Bei dem hier beschriebenen erfindungsgemäßen Ausführungsbeispiel hat die Lage des Sensors, also der Initialisierungssensor 11 keinen Einfluss auf die absolute Genauigkeit, da immer die Kombination der Referenzmarkierung aus positiven und negativen Schwenkwinkel gemeinsam betrachtet werden; Somit kompensieren sich Positionstoleranzen bezüglich der genauen Mitten- oder Rastposition des Aktuators 1.

Eine alternative Möglichkeit zu einer kostengünstigen Positionserfassung kann auch durch einen analogen oder digitalen Hubsensor möglich gemacht werden, der die Federauslenkung der Schraubendruckfeder misst. Bei diesem stufenlosen Messsystem kann auf eine Initialisierung komplett verzichtet werden. In diesem Fall genügt die von den Hallsensoren des Elektromotors 4 übermittelte Drehrichtung des Motors, sodass die Positionssignale des Hubsensors lediglich mit dem Drehwinkelsignal des Elektromotors 4 kombiniert werden, wobei von diesem Drehwinkelsignal lediglich der Drehsinn erforderlich ist.

Ein weiterer Vorteil der der Erfindung besteht darin, dass die Initialisierungssignale 11 im Normalbetrieb des Aktuators 1 häufig aktiviert werden, nämlich immer dann, wenn die Hülse 16 mit der Referenzmarkierung 12 den Initialisierungssensor 11 überstreicht. Auf diese Weise werden die Stellsignale in der Steuereinrichtung 8 ständig neu kontrolliert; Sollte es zu Abweichungen zwischen der in der Steuereinrichtung 8 ermittelten Neutralposition und der aktuell eingespeisten Neutralposition geben, so kann mit den aktuellen Werten die Steuereinrichtung 8 neu referenziert werden. Durch diese Anordnung ist es also möglich, die Funktion der Hallsensoren und der nachgeschalteten Logik während des Betriebes zu überwachen und im Fehlerfall Gegenmaßnahmen einzuleiten, beispielsweise Eintragung in einen Fehlerspeicher des Steuergerätes aktivieren einer Warnlampe, etc. und ggf. Notbetrieb einzuleiten.

### Positionszahlen

- 1: Aktuator
- 2: Stabilisatorelement
- 3a: Stabilisatorhälfte
- 3b: Stabilisatorhälfte
- 4: Elektromotor
- 5: Getriebe
- 6:
- 7: Zusatzantrieb
- 8: Steuereinrichtung
- 9: Leitung
- 10: Leitung
- 11: Initialisierungssensor
- 12: Referenzmarkierung
- 13: Leitung
- 14: Schraubendruckfeder
- 15: Gehäuseflansch
- 16: Hülse
- 17: Kurvenbahngetriebe
- 18: Kurvenbahn
- 18a: Kurvenbahnträger
- 18b: Kurvenbahnträger
- 19: Kopplungszapfen
- 19a: Koppelelement
- 20: Rastposition

- S1: Drehwinkelsignal
- S2: Positionssignal
- S3: Stellsignal

## Patentansprüche

1. Wankstabilisator für das Fahrwerk eines Kraftfahrzeuges, der einem Wanken des Aufbaus des Kraftfahrzeuges aktiv entgegenwirkt, wobei ein Aktuator (1) zum Stellen eines Stabilisatorelementes (2) mit einem Elektromotor (4) versehen ist, **dadurch gekennzeichnet, dass** eine für den Aktuator (1) vorgesehene Steuereinrichtung (8) ein Stellsignal (S3) generiert aus einem einen Drehsinn und einen Drehwinkel angebenden Drehwinkelsignal (S1) des Elektromotors (4) und aus einem Initialisierungssignal, wobei das Initialisierungssignal eine Referenzposition des Stabilisatorelementes (2) angibt, und wobei eine das Initialisierungssignal generierende Initialisierungseinrichtung eine an dem Stabilisatorelement (2) vorgesehene Referenzmarkierung (12) und einen Initialisierungssensor (11) aufweist.

2. Wankstabilisator nach einem oder mehreren der vorangegangenen Ansprüche, bei dem der Elektromotor (4) als bürstenloser Gleichstrommotor ausgebildet ist, dessen Kommutator das Drehwinkelsignal (S1) erzeugt.

3. Wankstabilisator nach Anspruch 2, bei dem der Kommutator mit Sensoren, insbesondere Hallsensoren versehen ist.

4. Wankstabilisator nach Anspruch 1, bei dem das Stabilisatorelement (2) zwei insbesondere als Drehstabfedern ausgebildete Stabilisatorhälften (3a, 3b) aufweist, an die der Aktuator (1) angeschlossen ist.

5. Wankstabilisator nach einem oder mehreren der vorangegangenen Ansprüche, bei dem der Initialisierungssensor (11) einer der beiden Stabilisatorhälften (3a, 3b) zugeordnet ist.

6. Wankstabilisator nach Anspruch 4, bei dem der Aktuator (1) ein Kurvenbahngetriebe (17) aufweist, mit zwei je an einer der Stabilisatorhälfte (3a, 3b) angeschlossenen Kurvenbahnträgern (18a, 18b), in deren Kurvenbahnen (18) ein Hubbewegungen durchführendes Koppelelement (19a) greift .

7. Wankstabilisator nach Anspruch 6, bei dem der eine Kurvenbahnträger eine u- oder v-förmige Kurvenbahn (18) aufweist, wobei in einer Schnittstelle der beiden Kurvenbahnschenkel der u- oder v-förmigen Kurvenbahn (18) die Referenzposition des Stabilisatorelementes (2) ist.

8. Wankstabilisator nach Anspruch 6, bei dem ein Hubsensor eine Auslenkung des Koppelelementes erfasst und als Positionssignal an die Steuereinrichtung (8) leitet.

## Claims

1. Roll stabilizer for the chassis of a motor vehicle, which actively counteracts a rolling of the body of the motor vehicle, an actuator (1) for actuating a stabilizer element (2) being provided with an electric motor (4), **characterized in that** a control device (8) provided for the actuator (1) generates an actuating signal (S3) from a rotary-angle signal (S1), indicating a direction of rotation and rotary angle, of the electric motor (4) and from an initializing signal, the initializing signal indicating a reference position of the stabilizer element (2), and an initializing device which generates the initializing signal having a reference marking (12), provided on the stabilizer element (2), and an initializing sensor (11).

2. Roll stabilizer according to one or more of the preceding claims, in which the electric motor (4) is designed as a brushless direct-current motor, the commutator of which generates the rotary-angle signal (S1).

3. Roll stabilizer according to Claim 2, in which the commutator is provided with sensors, in particular Hall sensors.

4. Roll stabilizer according to Claim 1, in which the stabilizer element (2) has two stabilizer halves (3a, 3b) which are designed particularly as torsion bars and to which the actuator (1) is connected.

5. Roll stabilizer according to one or more of the preceding claims, in which the initializing sensor (11) is assigned to one of the two stabilizer halves (3a, 3b).

6. Roll stabilizer according to Claim 4, in which the actuator (1) has a camtrack mechanism (17), in which two camtrack carriers (18a, 18b) which are connected in each case to one of the stabilizer halves (3a, 3b) and in the camtracks (18) of which engages a coupling element (19a) which executes lifting movements.

7. Roll stabilizer according to Claim 6, in which the one camtrack carrier has a U- or V-shaped camtrack (18), the reference position of the stabilizer element (2) being at an intersection of the two camtrack legs of the U- or V-shaped camtrack (18).

8. Roll stabilizer according to Claim 6, in which a lift sensor detects a deflection of the coupling element and conducts it as a position signal to the control device (8).

## Revendications

1. Stabilisateur antiroulis pour le châssis d'un véhicule automobile, qui agit activement à l'encontre d'un roulis de la carrosserie du véhicule automobile, un actionneur (1) pour régler un élément de stabilisateur (2) étant pourvu d'un moteur électrique (4), **caractérisé en ce qu'**un dispositif de commande (8) prévu pour l'actionneur (1) génère un signal de commande (S3) à partir d'un signal d'angle de rotation (S1) du moteur électrique (4) indiquant un sens de rotation et un angle de rotation, et d'un signal d'initialisation, le signal d'initialisation indiquant une position de référence de l'élément de stabilisateur (2), et un dispositif d'initialisation générant le signal d'initialisation présentant un marquage de référence (12) prévu sur l'élément de stabilisateur (2) et un capteur d'initialisation (11).

2. Stabilisateur antiroulis selon l'une quelconque ou plusieurs des revendications précédentes, dans lequel le moteur électrique (4) est réalisé sous forme de moteur à courant continu sans balais, dont le commutateur produit le signal d'angle de rotation (S1).

3. Stabilisateur antiroulis selon la revendication 2, dans lequel le commutateur est pourvu de capteurs, notamment de capteurs de Hall.

4. Stabilisateur antiroulis selon la revendication 1, dans lequel l'élément de stabilisateur (2) présente deux moitiés de stabilisateur (3a, 3b) réalisées notamment sous forme de ressorts à barre de torsion, auxquelles est raccordé l'actionneur (1).

5. Stabilisateur antiroulis selon l'une quelconque ou plusieurs des revendications précédentes, dans lequel le capteur d'initialisation (11) est associé à l'une des deux moitiés de stabilisateur (3a, 3b).

6. Stabilisateur antiroulis selon la revendication 4, dans lequel l'actionneur (1) présente une commande à pistes incurvées (17) avec deux supports de pistes incurvées (18a, 18b) raccordés respectivement à l'une des moitiés de stabilisateur (3a, 3b), dans les pistes incurvées (18) de laquelle vient en prise un élément de couplage (19a) effectuant des mouvements alternatifs.

7. Stabilisateur antiroulis selon la revendication 6, dans lequel l'un des supports de pistes incurvées présente une piste incurvée (18) en forme de u ou de v, la position de référence de l'élément de stabilisateur (2) se trouvant à une intersection des deux branches de piste incurvée de la piste incurvée (18) en forme de u ou de v.

8. Stabilisateur antiroulis selon la revendication 6, dans lequel un capteur de course détecte une déviation de l'élément d'accouplement et la transmet en tant que signal de position au dispositif de commande (8).
